# DEMANDE DE BREVET EUROPEEN

(11) **EP 2 015 223 A2**
(43) Date de publication de la demande: **14.01.2009**
(21) Numéro de dépôt: 08392009.0
(22) Date de dépôt: 09.07.2008
(51) Int. Cl.: G06K 9/00

(54) **Microcapteur de pression**

(30) Priorité: 12.07.2007 FR 0705068
(71) Demandeur: STMicroelectronics SA, 92120 Montrouge (FR)
(72) Inventeur: Abele Nicolas, 75006 Paris (FR)
(74) Mandataire: Schuffenecker, Thierry

(57) **Abrégé**

Un Microcapteur de pression et son procédé de fabrication.

Le microcapteur comporte un transistor MOS FET à grille mobile (2), une cavité (6) entre la grille mobile (2) disposés sur un substrat (1), des moyens pour mesurer la position de ladite grille et des moyens pour déplacer la dite grille mobile sous l'effet d'une pression.

L'invention décrit plus spécifiquement un système de reconnaissance d'empreinte digitale.

## Description

### Domaine technique de l'invention

La présente invention concerne un microcapteur de pression permettant notamment de mesurer le profil d'une surface lorsque cette surface est appliquée sur le microcapteur.

La présente invention s'applique en particulier à la reconnaissance des empreintes digitales.

### Etat de la technique

De façon usuelle la réalisation d'un détecteur d'une empreinte digitale est basée sur une mesure capacitive. Le doigt est appliqué sur une surface sensiblement plane comportant un grand nombre de premières électrodes de différentes capacités. Le doigt, conducteur électrique, constitue une seconde électrode commune à ces dites capacités. La surface plane est recouverte d'un isolant électrique. La distance entre le doigt seconde électrode des capacités et les premières électrodes n'est pas constante et varie selon la rugosité du doigt. Les valeurs mesurées des différentes capacités sont alors représentatives du relief du doigt c'est-à-dire de l'empreinte digitale.

Pour limiter l'utilisation d'un trop grand nombre de capacités, il a été proposé un balayage des aspérités du doigt par une barrette d'éléments capacitifs. Un tel dispositif est décrit dans la demande de brevet EP 0 929 050.

La mesure d'une capacité est une mesure délicate en ce sens qu'elle nécessite un circuit de mesure complexe. Elle est en outre sensible à l'environnement électrostatique puisque les circuits électroniques associés mesurent de très faibles courants dans des branches à haute impédance. La conductivité du doigt ou la pollution en surface du détecteur peuvent influencer la mesure de la capacité associée aux aspérités du doigt.

Il est connu de l'état de la technique la réalisation de transistors MOS FET à grille mobile. Les demandes de brevets WO 03/078299 et EP 1 637 498 décrivent deux modes de réalisation d'un tel transistor. De façon connue de l'homme du métier un transistor MOS FET est réalisé en utilisant un procédé classique. On substitue, au cours du procédé de réalisation du transistor MOS, au moins localement, une couche sacrificielle à l'oxyde de grille situé entre la grille du transistor MOS et le substrat. En fin de procédé, l'élimination de cette couche sacrificielle et des couches éventuelles déposées au-dessus de la grille permet de réaliser une grille mobile vis-à-vis du substrat sous-jacent.

Pour l'homme du métier il existe de nombreuses variantes de procédés de réalisation d'un tel transistor et de nombreuses possibilités pour construire une grille mobile. Les demandes de brevets WO 03/078299 et EP 1 637 498 proposent une grille suspendue et une grille déformable qui sont des cas particuliers d'une grille mobile. Ces procédés de réalisation peuvent être rendus compatibles avec les procédés classiques MOS. Les transistors à grilles mobile peuvent alors être réalisés dans un circuit intégré comportant des fonctions réalisés avec des transistors MOS à grilles non mobiles. Cependant des grilles mobiles sont des éléments extrêmement fragiles et petits qui ne sont jamais mis en interaction mécaniques avec des éléments extérieurs au circuit intégré. De telles interactions détruiraient irrémédiablement la grille ou bien créeraient une pollution chimique au niveau des transistors MOS FET.

### Exposé de l'invention

Nous visons à obtenir un capteur dont les fonctionnalités sont plus étendues que celle précédemment décrites. La présente invention propose un microcapteur de pression apte à mesurer la rugosité d'une surface. La mesure n'est pas sensible à la conductivité électrique de la surface, Elle est insensible aux charges électrostatiques et aux pollutions chimiques apportées par la surface à mesurer.

Selon les modes de réalisation proposés, le microcapteur peut acquérir le profil de la surface dans un environnement bruité par des charges électrostatiques ou par une pollution électromagnétique.

La vitesse d'acquisition du profil de la surface et la résolution spatiale de cette acquisition est ajustable selon le nombre et la dimension des points de mesure du microcapteur.

En particulier le microcapteur est apte à mesurer la rugosité d'une surface cutanée et notamment apte à acquérir et à reconnaître une empreinte digitale d'un doigt.

Pour atteindre ces objectifs, la présente invention réalise un microcapteur de pression formé sur un substrat caractérisé en ce qu'il comporte un transistor MOS FET à grille mobile, une cavité entre la grille mobile et le substrat, des moyens pour mesurer la position de ladite grille et des moyens pour déplacer la dite grille mobile sous l'effet d'une pression.

De préférence, les moyens pour déplacer la grille mobile sont constitués d'un gel silicone en contact mécanique avec cette dernière et apte à transformer une pression appliquée sur une surface externe du gel en un mouvement de la grille par l'intermédiaire dudit contact mécanique.

Dans un mode de réalisation particulier, le gel présente un module de Young inférieur à 400 MPa et est adhérent à la grille mobile. En outre, le gel repose sur le substrat à l'extérieur de ladite cavité.

Alternativement, la grille mobile se déplace par l'intermédiaire d'une membrane déformable sous l'effet de la pression et apte à développer une force électrostatique ou électromagnétique agissant sur la grille mobile, la force étant variable en fonction de la distance entre ladite membrane et la dite grille mobile.

De préférence, le microcapteur est placé dans une cavité d'un support fermé en sa partie supérieure par ladite membrane élastique, tendue, conductrice et polarisée par rapport aux dites grilles mobiles. L'invention réalise également un procédé de mesure du relief d'une surface d'un corps caractérisé en ce que ladite surface du corps est appliquée à la surface d'un gel silicone ou à la surface d'une membrane. Le gel ou la membrane sont aptes à acquérir le relief de la surface du corps et de le restituer au niveau des grilles mobiles des transistors MOSFET par l'intermédiaire de la pression exercée localement sur la dite surface du gel silicone ou de la membrane par la surface du corps appliqué.
De préférence, le procédé est appliqué au traitement du relief d'un doigt de manière à réaliser un procédé d'acquisition d'une empreinte digitale.

L'invention réalise également un système d'affichage plat basé sur une matrice organisée en lignes et en colonnes comportant à chaque intersection un pixel d'affichage, caractérisé en ce qu'il comporte en outre un agencement de microcapteurs de pression, les microcapteurs étant basés sur un transistor MOS FET à grille mobile séparé du substrat par une cavité et disposant de moyens pour mesurer la position de ladite grille et des moyens pour déplacer la dite grille mobile sous l'effet d'une pression.
Dans un mode de réalisation particulier, le système d'affichage est de type LCD (Liquid Crystal Display) ou à diodes luminescentes LED ou OLED.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La Figures 1 illustre un transistor à grille mobile.
La Figure 2 présente les caractéristiques électriques d'un tel transistor à grille mobile.
Les figures 3a et 3b donnent des schémas électriques utilisant un transistor à grille mobile.
Les figures 4a et 4b illustrent un microcapteur de pression selon un mode de réalisation.
La figure 5 illustre un microcapteur de pression selon un autre mode de réalisation.
La figure 6 représente une matrice de transistors à grilles mobiles.
La figure 7 montre un boitier de circuit intégré comportant un microcapteur de pression.
La figure 8 illustre une structure d'affichage d'un écran plat organisée en matrice pouvant être doté d'un arrangement de microcapteurs conformes à la présente invention de manière à constituer un système d'affichage plat de type tactile.
La figure 9 illustre une structure d'affichage basée sur une matrice organisée en lignes et colonnes comportant eéla disposition d'un

Comme cela est classique dans la représentation des microcomposants, les diverses figures ne sont pas tracées à l'échelle. Dans les différentes figures les mêmes références ont été utilisées pour représenter des éléments similaires.

### Description d'un mode de réalisation

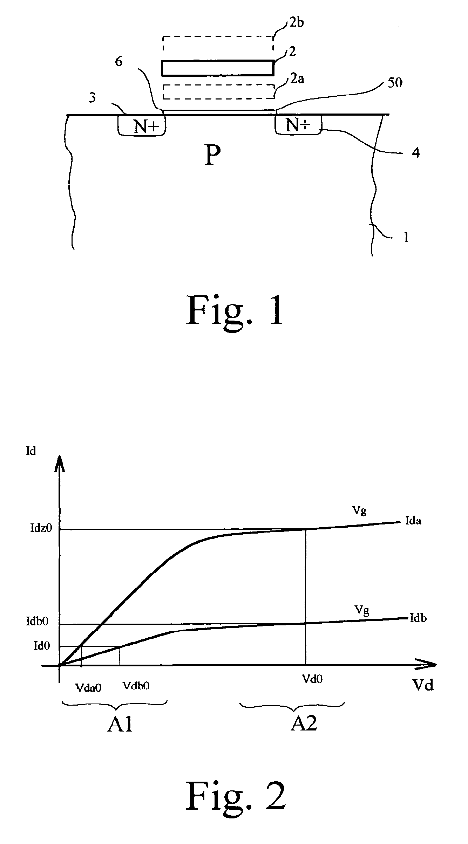

La figure 1 représente un transistor MOS FET canal N à grille mobile. Ce transistor est réalisé sur un substrat 1 en silicium de type P. Une grille 2 en matériau conducteur est placée à proximité de la surface du silicium et est isolée électriquement du substrat 1. Des jonctions de source et drain 3 et 4 de type N+ fortement dopées sont placées, dans le silicium, en bordure de grille. L'ensemble substrat 1, grille 2, source et drain 3 et 4 forme un transistor MOS FET de type N. Tout autre type de substrat semiconducteur (silicium, germanium, etc.) et tout type dopage (N ou P) apte à réaliser un MOS FET à grille de contrôle est utilisable. La grille 2 du transistor est séparée de la surface du substrat par un interstice 6 constitué d'un isolant qui est un gaz ou du vide. La grille de ce transistor est fixée par une de ses extrémités au substrat de telle façon que l'épaisseur de l'interstice 6 entre la grille 2 et la surface du substrat 1 puisse varier pendant un mouvement de la grille conséquent aux forces appliquées sur la grille et à la flexibilité de la structure de grille. Sur la figure 1 deux positions différentes de la même grille 2 sont représentées et illustrées en pointillé. La position 2a représente la grille 2 proche de la surface du substrat ; la position 2b représente la grille 2 éloignée de la surface du substrat.

La forme de la grille est un rectangle de côté L et Z. L est la distance entre la source et le drain. L est la longueur du transistor, Z est la largeur du transistor rectangulaire. Un transistor carré dont le côté L=Z est compris entre 5 et 500 microns, de préférence entre 10 et 100 microns est adapté à la présente invention.

Lorsqu'aucune force n'est appliquée sur la grille 2, la distance entre la grille conductrice et la surface du substrat est de préférence comprise entre 50 nm et 200 nm. Lorsqu'une force est appliquée sur la grille 2 cette distance peut diminuer jusqu'à 5 nm ou augmenter au delà de 400 nm.

Afin d'éviter tout risque de contact électrique entre la grille et la surface du substrat, la grille ou le substrat peut être recouvert d'un isolant 50 par exemple de l'oxyde de silicium dont l'épaisseur est supérieure à 4 nm.

Le fonctionnement du transistor MOS FET de type N à grille mobile est classique. Lorsque la grille 2 est portée à un potentiel positif par rapport au substrat un champ électrique perpendiculaire à la surface du silicium et dirigé de haut en bas en résulte. Lorsque ce champ électrique est suffisamment élevé, il se produit une inversion du type du silicium en surface qui devient dans le cas de notre exemple du silicium de type N : il y a en surface du substrat P création d'un canal d'inversion de silicium de type N comportant une forte densité d'électrons. Cette densité d'électron, dans le canal ainsi formé en surface augmente avec le champ électrique. Cette densité d'électrons croit avec le potentiel appliqué sur la grille et augmente lorsque la distance entre la grille et la surface du silicium diminue. Selon le fonctionnement connu des transistors MOS FET, des source et drain 3 et 4 placés de part et d'autre de ce canal respectivement injectent des électrons dans le canal N ainsi formé et collectent les électrons du canal.

La Figure 2 représente des caractéristiques électriques d'un tel transistor MOS FET à grille mobile. La source et le substrat sont à un potentiel nul. La grille est à un potentiel positif V_{g}, par exemple +2 volts, afin de former un canal et de rendre conducteur le transistor. Le potentiel de drain V_{d} varie de 0 à 3 Volts et est représenté sur l'axe des abscisses. Le courant de drain I_{d} est reporté sur l'axe des ordonnées. Les deux courbes I_{da} et I_{db} tracées sont représentatives du courant de drain correspondant respectivement aux positions 2a et 2b basse et haute de la grille 2 du transistor MOS FET à grille mobile.

Ces caractéristiques I_{d} en fonction de V_{d} sont classiques pour un transistor MOS FET. Pour une forte tension de grille associée à une faible tension de drain le régime de fonctionnement est dit ohmique : le courant de drain croit linéairement avec la tension de drain (région A1 de la figure 2). Pour une faible tension de grille associée à une forte valeur de la tension de drain le régime de fonctionnement est dit saturé : le courant de saturation de drain est sensiblement constant en fonction de la tension de drain appliquée. (Région A2 de la figure 2).

Pour une tension de grille fixée, le courant de saturation mesuré dans la région A2 augmente lorsque la grille se rapproche du substrat (position 2a). Si on applique une tension V_{d0} sur le drain il en résulte un courant de drain I_{da0} ou I_{db0} représentatif de la position 2a ou 2b de la grille 2. Toutes les positions intermédiaires entre les positions 2a et 2b sont ainsi mesurables. En d'autres termes la mesure du courant de drain permet de connaître la distance entre la grille et le substrat.

Dans la région A1 et pour une tension de grille fixée, la pente de la droite représentant le courant de drain en fonction de la tension de drain augmente lorsque la grille se rapproche du substrat (position 2a). Si on force un courant I_{d0} dans le drain il en résulte une tension de drain V_{da0} ou V_{db0} représentatif de la position 2a ou 2b de la grille 2. Toutes les positions intermédiaires entre les positions 2a et 2b sont ainsi mesurables. En d'autres termes la mesure de la tension de drain permet de connaître la distance entre la grille et le substrat.

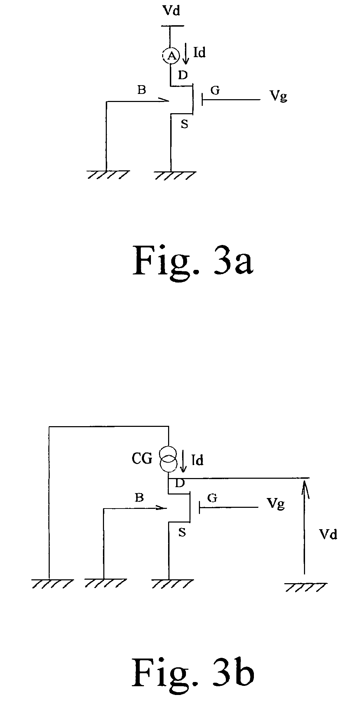

Les figures 3a et 3b sont des schémas électriques permettant d'effectuer les mesures décrites ci-dessus. La Figures 3a représente un transistor MOS FET de type N à grille mobile. Le transistor est polarisé dans la région de saturation A2. La source S et le substrat B sont reliés à la masse et à un potentiel Vₛ et V_{b} nul. Le drain D et la grille G sont à des potentiels positifs respectivement V_{d} et V_{g}. La mesure du courant dans le drain par un ampèremètre A donne la valeur du courant de drain I_{d} et en conséquence la distance de la grille à la surface du substrat.

La Figure 3b représente un transistor MOS FET de type N à grille mobile. Le transistor est polarisé dans la région ohmique A1. La source S et le substrat B sont reliés à la masse, à un potentiel nul Vₛ et V_{b}. Le drain D est relié à un générateur de courant CG qui impose un courant I_{d} dans le drain du transistor MOS FET. La grille G est à un potentiel positif V_{g}. La mesure de potentiel de drain V_{d} permet de connaître la distance de la grille à la surface du substrat.

L'homme du métier sait intégrer dans le substrat de silicium P les fonctions ampèremètre ou générateur de courant en utilisant des transistors MOS FET à grilles fixes. Les deux exemples de mesures ci-dessus sont des exemples simplifiés. Une fois connu le modèle mathématique représentant le transistor à grille mobile avec comme paramètre la distance entre la grille et le substrat, à tout point de fonctionnement Vₛ, V_{g}, V_{d}, V_{b}, I_{d} correspond une position unique de la grille mobile. Ce modèle permet de mesurer la distance de la grille en fonctions des paramètres électriques mesurés sur le transistor. Le modèle mathématique et son exploitation sont également mémorisables et intégrables sur la puce comportant les transistors à grilles mobiles. La mesure de la distance entre la grille mobile et le substrat s'effectue in-situ dans la puce électronique comportant le microcapteur de pression et la logique d'exploitation associée.

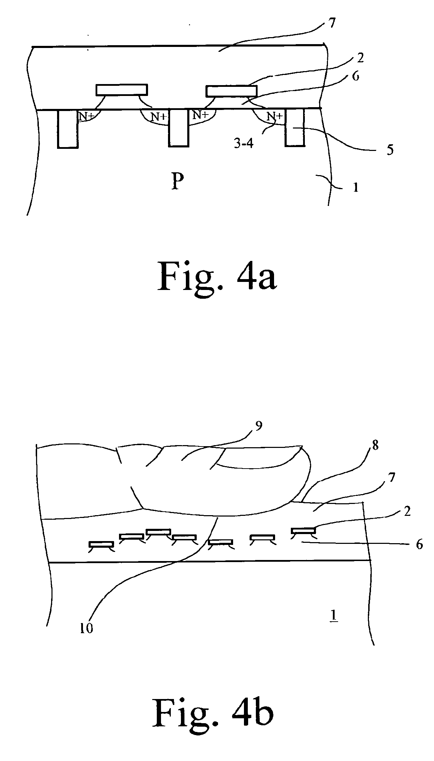

La figure 4a illustre un microcapteur de pression selon un mode de réalisation de la présente invention. Sur un substrat 1 de silicium de type P sont formés plusieurs transistors à grilles mobiles 2. La longueur des grilles sont comprises entre 5 et 500 microns. Ces grilles sont distantes du substrat de 50 à 200 nm. Les régions de source et drain 3 et 4 de type N+ sont formées dans le substrat de part et d'autre de la grille mobile 2. Une région isolante 5, par exemple une tranchée remplie d'oxyde, entoure les transistors. Les dimensions des diffusions N+ 3 et 4 et des tranchées 5 sont adaptées à la technologie de fabrication des circuits intégrés. Les transistors à grilles mobiles sont recouverts d'un gel silicone 7 d'épaisseur comprise entre 10 et 300 microns. A titre d'exemple la société Dow Corning propose des gels référencés WL-3010 WL-5150 WL-5350 et WL5351. Ces gels se présentent soit sous forme de pate ou bien sous forme liquide. La viscosité du liquide est ajustable et sera choisie de telle façon que le gel ne remplisse pas l'interstice 6 entre la grille mobile 2 et le substrat 1. De façon préférentielle la viscosité du liquide sera choisie de telle façon que le gel 7 repose sur les régions isolantes 5 ou sur les source et drain 3-4. Le module de Young des gels silicone utilisés est faible, typiquement inférieure à 400 MPa.

La figure 4b illustre le fonctionnement du microcapteur de pression représenté en figure 4a. Des grilles mobiles sont réalisées et sont séparées du substrat par l'interstice 6. Le gel silicone 7 recouvre l'ensemble des grilles mobiles et présente une surface supérieure 8 sur laquelle est appliqué un corps en relief, tel que, par exemple, un doigt 9. L'interface 10 entre le doigt 9 et la surface du gel silicone reproduit les aspérités du doigt. En effet le faible module de Young du gel silicone permet une déformation locale et élastique du gel sous une faible pression exercée par les aspérités du doigt. Cette déformation est alors transmise aux grilles mobiles qui, à leur tour, reproduisent les aspérités du doigt. La tenue mécanique de l'ensemble est assurée par une adhérence du gel 7 sur les grilles 2 et par le remplissage préférentiel de l'interstice situé entre les grilles mobiles 2. Ce remplissage peut également empiéter sur la périphérie de l'interstice 6 entre la grille et le substrat. L'élasticité des mouvements de la grille 2 est assurée par l'élasticité de gel silicone qui emprisonne de fait les grilles mobiles 2. La résistance à cette déformation est faible et ajustable par le module de Young du gel de silicone. La mesure de la distance de ces grilles au substrat permet l'acquisition de la rugosité cutanée et de l'empreinte digitale. Lorsque le doigt est retiré de la surface, les grilles 2 reprennent leur position initiale et une nouvelle acquisition de profil peut être faite.

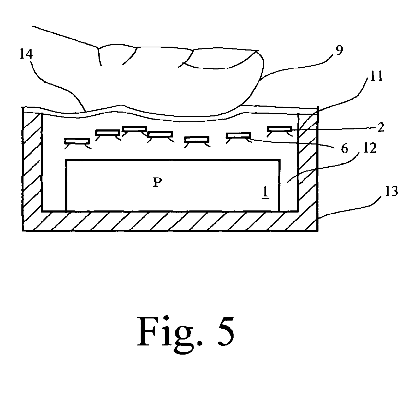

La figure 5 illustre un autre mode de réalisation d'un microcapteur de pression selon la présente invention. Sur un substrat 1 de silicium de type P sont formés plusieurs transistors à grilles mobiles 2. La longueur de la grille est comprise entre 5 et 500 microns. Au repos, ces grilles sont distantes du substrat de 50 à 200 nm et séparées du substrat par un interstice 6. Le substrat supportant les transistors à grille mobile 2 est placé dans une cavité 12 délimité en sa partie inférieure et sur ses cotés par un matériau 13. La partie supérieure de la cavité est bornée par une membrane 11 sensiblement plane et parallèle au substrat. La surface de la membrane est d'environ 1 Cm². La distance de cette membrane aux grilles 2 est comprise entre 50 et 5000 microns et de préférence entre 200 et 500 microns. Cette membrane est par exemple en matériau synthétique de type polymère. Elle est tendue et élastique et susceptible de se déformer en fonction d'une action mécanique. Elle est rendue conductrice au courant électrique soit par un dépôt conducteur sur une de ses faces soit par la composition même de la membrane. Par exemple l'incorporation de carbone ou de métal dans le film polymère le rend conducteur au courant électrique sans nuire à ses propriétés mécaniques. La cavité est remplie d'un gaz maintenu à la pression atmosphérique pour éviter une déformation de la membrane en fonction de la pression atmosphérique. Sur une portion 14 de la surface externe de la membrane fermant la cavité est appliqué un doigt 9. La pression exercée par le doigt déforme de façon élastique et localement la membrane qui reproduit alors les aspérités du doigt. Les propriétés de la membrane c'est-à-dire son élasticité et sa tension sont telles qu'il n'y a pas de déformation permanente de la membrane et que celle-ci ne vient pas en contact physique avec les grilles 2 mobiles.

Les grilles mobiles sont portées à une tension positive par exemple 3 volt et la membrane est portée à une tension nulle. La différence de potentiel entre la membrane et la grille 2 crée une force électrostatique qui attire la grille vers la membrane. Il en résulte un déplacement de la grille 2 vers la membrane. Ce déplacement est limité par les forces de rappel de la fixation de la grille 2 sur le substrat 1. La déformation locale de la membrane est ainsi transmise aux grilles mobiles par une force électrostatique. Ces grilles mobiles reproduisent les aspérités du doigt. La mesure de la distance de ces grilles mobiles au substrat permet l'acquisition de l'empreinte digitale.

Tout autre type de force s'appliquant à distance peut être utilisé. En particulier les forces électromagnétiques ou bien les forces magnétiques peuvent être générées et utilisées. Par exemple un courant parcourant des grilles mobiles ou une région située dans la membrane crée un champ électromagnétique apte, en présence d'un champ magnétique, à générer une force appliquée sur les grilles mobiles 2. Des matériaux ferromagnétiques peuvent être inclus dans la membrane et dans les grilles afin de créer des champs magnétiques.

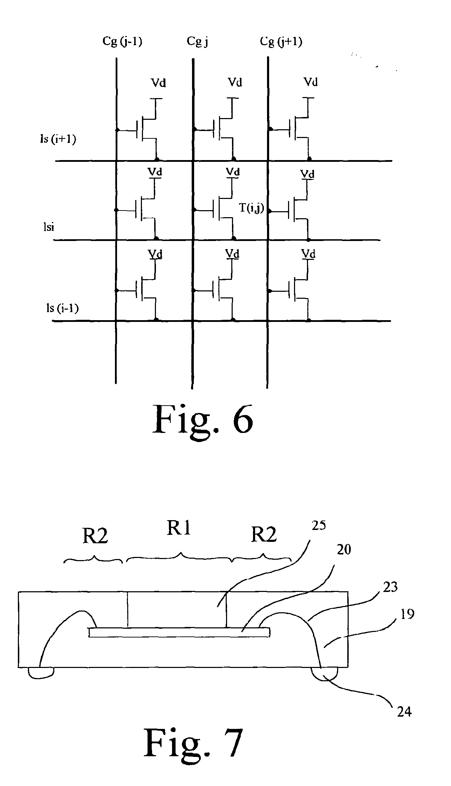

La figure 6 représente un schéma électrique d'une matrice Mₙₘ de transistors à grilles mobile susceptible d'acquérir et de reconnaître une empreinte digitale, c'est-à-dire de reconnaître le dessin formé par les lignes de la peau ou des doigts.

Les transistors à grille mobile représentés dans les figures 4a et 4b et 5, sont disposés selon une matrice Mₙₘ de transistors de n lignes Iᵢ (i variant de 1 à n) et m colonnes Cⱼ (j variant de 1 à m). La surface de la matrice Mₙₘ est inférieure à 1 cm² et comporte environ 200 transistors à grilles mobiles. Le nombre de transistors peut être beaucoup plus élevé mais cela n'est pas utile pour la reconnaissance d'une empreinte digitale. Dans l'hypothèse d'un espacement régulier des transistors dans la surface de 1 cm², le pas de répétition des transistors est de 0,7 mm ce qui est suffisant pour détecter la rugosité d'un doigt. 200 mesures de rugosité cutanée sur un doigt permettent une bonne reconnaissance d'une empreinte digitale.

On suppose que tous les transistors de la matrice Mₙₘ sont des transistors MOS FET à canal N à grille mobile. Les drains de tous les transistors sont reliés électriquement et polarisés à une tension V_{d} positive. Une ligne conductrice de connexion Iₛᵢ relie toutes les sources des transistors T_{(i,j)} d'une même ligne i. Une colonne conductrice de connexion C_{gj} relie toutes les grilles des transistors T_{(i,j)} d'une même colonne j.

Le potentiel du substrat des transistors est pris comme référence de tension. La mesure de la position de la grille du transistor de la i^{ème} ligne et j^{ème} colonne (T_{(i,j)}) se fait, conformément à la méthode de mesure précédemment expliquée, en relation avec la figure 3a :
- On polarise toutes les grilles des transistors à 0 volt sauf celles reliées par la colonne conductrice C_{gj}. C_{gj} est polarisée à une tension positive.
- On mesure le courant dans la ligne conductrice de connexion Iₛᵢ.
Ce courant est le courant parcourant le transistor T_{(i,j)} les autres transistors de la même ligne étant bloqués. Ce courant permet de mesurer la distance entre la grille mobile et le substrat du transistor T_{(i,j)}. Cette matrice Mₙₘ, recouverte d'un gel silicone 7 décrit en relation avec la figure 4b ou bien surmontée d'une membrane 11 décrite en relation avec la figure 5, constitue un microcapteur de 1 cm² de surface comportant 200 points de mesures. Ce microcapteur est apte à mesurer le profil d'une surface qui lui est appliquée. Il peut notamment servir à acquérir une empreinte digitale sous forme d'un signal électrique.
La surface, le nombre de points de mesures peuvent être ajustés selon le type d'acquisition du profil de la surface que l'on veut effectuer.
Les transistors à grille mobile peuvent être à canal N ou P, l'homme du métier sait ajuster les polarisations et le signe des tensions pour effectuer la mesure de la distance entre la grille et le substrat. Le décodage par ligne et colonne de la matrice Mₙₘ donné ci-dessus n'est qu'un exemple.
Tout autre type de décodage peut être utilisé. Les circuits intégrés de mémoire DRAM par exemple fournissent un grand nombre d'exemples de décodage d'une matrice de transistors MOS. Comme il a été expliqué ci-dessus, la position de la grille peut être déterminée par la mesure d'une tension de drain.
Nous avons supposé que tous les transistors étaient réalisés sur un substrat de type P unique. Il est possible de réaliser ces transistors MOS FET canal N dans des caissons P isolé d'un un substrat de type N . La sélection des transistors décodés peut être faite en polarisant le caisson P (au lieu de polariser la grille) afin de modifier la tension de seuil des transistors. Pour un potentiel positif de grille il est possible de rendre non conducteur le transistor MOS en appliquant une tension négative sur le caisson dudit transistor. La tension de seuil augmente et lorsqu'elle est supérieure à la tension de grille, le transistor est rendu non conducteur. Dans ce mode de fonctionnement proposé, toutes les grilles ont la même polarisation ce qui est souhaitable pour certains modes de réalisation proposés, notamment dans le cas ou la force agissante sur les grilles est une force électrostatique générée par la différence de potentiel entre les grilles et la membrane en relation avec la figure 5.

La figure 7 représente un boitier 19 d'une puce électronique 20. Cette puce électronique 20 comporte deux régions principales R1 et R2. On réalise le microcapteur de pression dans la première région R1. On réalise dans la seconde région 22 toutes les fonctions électriques usuellement réalisables dans un circuit intégré. Notamment ces fonctions peuvent comprendre l'adressage et le décodage des informations du microcapteur. De façon avantageuse ces fonctions peuvent inclure l'acquisition, la reconnaissance et l'exploitation de l'empreinte digitale. Des modules de transfert de l'information sont également prévus pour faire dialoguer cette puce 20 avec l'extérieur du boitier. Il n'y a pas de limitation pour les fonctions de cette puce 20 qui constitue un système intégré « SOC » (ou *system on chip* dans la littérature anglo-saxonne. De façon usuelle la puce 20 est reliée à des plots de contact 24 situés sur une face extérieure du boitier 19 grâce à des pistes 23 conductrices du courant électrique. Le boitier 19 comporte une cavité 25 située au-dessus de la région R1 et débouchant sur les grilles mobiles du microcapteur de pression de la région R1. Cette cavité selon le mode de réalisation choisi en relation avec les figures 4b et 5 est comblée par un gel silicone 7 ou obturée en sa partie supérieure par une membrane 11 sensiblement parallèle au plan de la puce électronique 20. La surface dont le profil doit être mesuré est appliquée sur le boitier au droit de la cavité 25.

De tels microcapteurs de pression sont utilisables dans de nombreux systèmes. A titre d'exemple on peut mentionner :
- action mécanique
   o introduction d'une information en relation avec un écran tactile
- sécurisation de système :
   o Reconnaissance de l'utilisateur du système par son empreinte digitale.
- Combinaison d'une action mécanique avec une signature de l'utilisateur ou d'une sécurisation du système. Les microcapteurs de pression selon la présente invention sont compatibles avec les technologies des écran plat. Un utilisateur peut alors entrer des informations sur cet écran plat avec son doigt. L'écran reconnaît alors la position du doigt sur l'écran ou la pression exercée par le doigt. De façon concomitante le système reconnait l'utilisateur par acquisition de son empreinte digitale et agit en fonction des privilèges accordée audit utilisateur. La donnée entrée dans le système est également automatiquement signée par l'utilisateur.
- Le microcapteur de pression est apte à reconnaître tout type de sceau ou intaille ou camée. Le système reconnaît alors le profil de cette clef mécanique très spécifique.

On peut aussi, dans un mode de réalisation particulier, intégrer les microcapteurs qui viennent d'être décrits dans un panneau d'affichage plats (*Flat Panel Display)* et les faire coopérer avec les circuits actifs permettant l'affichage de couleurs sur le panneau de manière à réaliser, en fin de compte, un écran de type tactile.

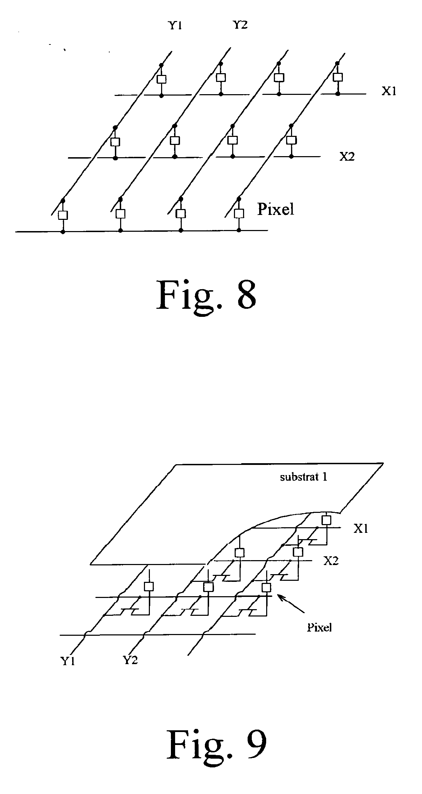

A cet effet, on réalise un système d'affichage plat quelconque, comportant des électrodes organisés en ligne et en colonne suivant une matrice. A l'intersection de chaque ligne et de chaque colonne se trouve localisé une cellule d'affichage élémentaire réalisant un pixel, comme cela est illustré dans la figure 8.

Alternativement, on pourra, comme cela est représenté dans la figure 9, activer chaque pixel au moyen d'un transistor en couche mince TFT (Thin Film Transistor) , ce dernier agissant alors comme un interrupteur. Comme on le voit sur la figure, on peut disposer au-dessus de la structure d'affichage un substrat doté des microcapteurs qui ont été décrits de manière à réaliser un affichage plan tactile.

D'une manière générale, toute technique d'affichage basée sur une matrice de cellules organisées en lignes et en colonne pourra être combinée avec les microcapteurs de la présente invention en fonction des besoins particuliers.

Dans un mode de réalisation particulier, on utilisera une cellule de cristal liquide LCD (*Liquid Crystal Display*) qui est basée sur des molécules organiques orientant la lumière suivant un axe en fonction d'un champ électrique, les cellules étant localisées entre deux filtres polarisant présentant des axes perpendiculaires.

D'autres procédés d'affichage sont utilisables avec l'invention. On pourra ainsi combiner le microcapteur de pression selon l'invention avec un système d'affichage à base de diodes électroluminescentes organiques OLED *(Organic Lilght Emitting Diods)* ou tout simplement LED (Light Emitting Display) comportant un assemblage de diodes électroluminescentes tricolores suivant une matrice généralement organisée en lignes et colonnes.

L'invention est compatible avec les techniques les plus récentes, telles que des techniques MEMS *(Micro Electro Mechanical System)* comme par exemple les miroirs DMD (*Digital Miror Device*) et les combiner avec le microcapteur de pression pour réaliser un écran plan tactile.

En combinant l'écran plat tactile qui vient d'être décrit avec un procédé de reconnaissance d'empreintes digitales, on peut alors envisager un affichage sélective pour des applications sensibles.

## Revendications

1. Microcapteur de pression formé sur un substrat (1) **caractérisé en ce qu'**il comporte un transistor MOS FET à grille mobile (2) , une cavité (6) entre la grille mobile (2) et le substrat (1), des moyens pour mesurer la position de ladite grille et des moyens pour déplacer la dite grille mobile sous l'effet d'une pression,
**caractérisé en ce qu'**il comporte en outre :
des moyens disposés entre une source de pression et la grille mobile pour déplacer ladite grille mobile sous l'effet de ladite pression

2. Microcapteur selon la revendication 1 dans lequel les moyens pour déplacer ladite grille mobile (2) sont constitués d'un gel silicone (7) en contact mécanique avec ladite grille mobile (2) et apte à transformer une pression appliquée sur une surface (8) externe dudit gel en un mouvement de la dite grille par l'intermédiaire dudit contact mécanique.

3. Microcapteur selon la revendication 2 dans lequel ledit gel (7) possède un module de Young inférieur à 400 MPa, le gel (7) est adhérent à la grille mobile (2) et le gel (7) repose sur le substrat (1) à l'extérieur de ladite cavité (6).

4. Microcapteur selon la revendication 1 dans lequel lesdits moyens pour déplacer la grille mobile comportent une membrane (11) déformable sous l'effet de la pression et apte à développer une force électrostatique ou électromagnétique agissant sur ladite grille mobile (2), la force étant variable en fonction de la distance entre ladite membrane (11) et la dite grille mobile (2).

5. Microcapteur selon la revendication 4 dans lequel le microcapteur est placé dans une cavité (12) d'un support (13) fermé en sa partie supérieure par ladite membrane (11) élastique, tendue, conductrice et polarisée par rapport aux dites grilles mobiles (2).

6. Microcapteur de pression selon l'une quelconque des revendications précédentes dans lequel le transistor MOS FET est un transistor canal N réalisé sur un substrat P en silicium monocristallin.

7. Microcapteur de pression selon l'une quelconque des revendications précédentes dans lequel les moyens pour mesurer la position de ladite grille mobile (2) comportent une modélisation mathématique des caractéristiques électriques du transistor MOS FET à grille mobile le modèle mathématique étant paramétré par la position de la grille mobile, l'acquisition d'un point de fonctionnement électrique dudit transistor et la détermination de la position de la grille à partir du modèle électrique et de la mesure électrique du point de fonctionnement.

8. Microcapteurs de pression selon la revendication 4 disposés selon une matrice (Mnm).

9. Microcapteurs de pression selon la revendication 5, la dite matrice (Mₙₘ) comportant environs 200 microcapteurs de pression régulièrement espacés.

10. Microcapteur de pression selon la revendication 5 ou 6 situé dans une région (R1) d'une puce (20), la puce comportant en outre une seconde région (R2) dans laquelle sont gravés des circuits électroniques aptes à déterminer la position de chaque grille mobile (2), à traiter l'information des positions des grilles et à interfacer avec l'extérieur de la puce.

11. Microcapteur de pression selon les revendications 1 et 7, ladite puce étant placée dans un boitier (19) comportant une cavité (25) débouchant sur ladite matrice et étant remplie dudit gel silicone (7) en contact mécanique avec lesdites grilles mobiles (2) et apte à transformer une pression appliquée sur une surface (8) externe dudit gel silicone (7) en un mouvement de la dite grille mobile (2) par l'intermédiaire dudit contact mécanique.

12. Microcapteur de pression selon les revendications 4 et 10, ladite puce étant placée dans un boitier (19) comportant une cavité (25) débouchant sur ladite matrice et étant obturée en sa partie supérieure par ladite membrane (11) sensiblement parallèle à la surface de la puce (20).

13. Procédé de mesure du relief d'une surface d'un corps (9) utilisant le microcapteur défini dans l'une des revendications 1 à 12, ladite surface du corps étant appliquée à la surface (8) d'un gel silicone (7) ou à la surface (14) d'une membrane (11), lesdits gel ou membrane étant apte à acquérir le relief de ladite surface du corps et de le restituer au niveau des grilles mobiles (2) de transistors MOSFET par l'intermédiaire de la pression exercée localement sur la dite surface (8,14) du gel silicone (7) ou de la membrane (11) par la surface du corps appliqué.

14. Procédé de reconnaissance d'une empreinte digitale d'un doigt utilisant le microcapteur défini dans l'une des revendications 1 à 12, ledit procédé comportant les étapes suivante :
- mesurer le profil cutané selon la revendication 13 ;
- traiter l'information et extraire l'empreinte digitale par une puce électronique comportant lesdits transistors MOSFET à grille mobile.

15. Procédé de reconnaissance d'une empreinte digitale d'un doigt selon la revendication 14 dans lequel ladite puce électronique est placée dans un boitier comportant une cavité (25), ladite cavité (25) étant remplie dudit gel silicone (7).

16. Procédé de reconnaissance d'une empreinte digitale d'un doigt selon la revendication 14 dans lequel ladite puce électronique est placée dans un boitier comportant une cavité (25), ladite cavité (25) étant obturée par ladite membrane (11).

17. Procédé de réalisation d'un microcapteur de pression **caractérisé en ce qu'**il comporte les étapes suivantes :
- Réalisation sur un substrat (1) en silicium de type P de transistors MOS FET à grilles mobiles (2) comportant une cavité (6) située entre la grille mobile (2) et le substrat (1).
- Recouvrement desdits transistors MOS FET à grilles mobiles (2) par un gel silicone (7) de module de Young inférieur à 400 MPa.

18. Procédé de réalisation d'un microcapteur de pression **caractérisé en ce qu'**il comporte les étapes suivantes :
- réaliser sur un substrat (1) en silicium de type P de transistors MOS FET à grilles mobiles (2) comportant une cavité (6) située entre la grille mobile (2) et le substrat (1).
- recouvrir desdits transistors MOS FET à grilles mobiles (2) une membrane élastique, tendue de façon sensiblement parallèle au substrats, conductrice du courant électrique
- polariser ladite membrane (11) par rapport aux grilles mobiles (2).

19. Système d'affichage plat basé sur une matrice organisée en lignes et en colonnes comportant à chaque intersection un pixel d'affichage, **caractérisé en ce qu'**il comporte en outre un agencement de microcapteurs de pression formé sur un substrat (1), chaque microcapteur de pression étant basé sur un transistor MOS FET à grille mobile (2) , une cavité (6) entre la grille mobile (2) et le substrat (1), des moyens pour mesurer la position de ladite grille et des moyens pour déplacer la dite grille mobile sous l'effet d'une pression, **caractérisé en ce qu'**il comporte des moyens disposés entre une source de pression et la grille mobile pour déplacer ladite grille mobile sous l'effet de ladite pression.

20. Système d'affichage plat selon la revendication 19 dans lequel les moyens pour déplacer ladite grille mobile (2) sont constitués d'un gel silicone (7) en contact mécanique avec ladite grille mobile (2) et apte à transformer une pression appliquée sur une surface (8) externe dudit gel en un mouvement de la dite grille par l'intermédiaire dudit contact mécanique.

21. Système d'affichage plat selon la revendication 19 ou 20 **caractérisé en ce que** chaque pixel est réalisé au moyen d'une cellule de cristal liquide LCD *(Liquid Crystal Display)* ou d'une ou plusieurs diodes électroluminescentes LED ou OLED
